# EUROPEAN PATENT SPECIFICATION

(11) **EP 2 969 598 B1**
(45) Date of publication and mention of the grant of the patent: **27.11.2019**
(21) Application number: 14768843.6
(22) Date of filing: 06.02.2014
(51) Int. Cl.: B60C 15/06, B60C 9/02

(54) **TIRE HAVING A SPLIT BODY PLY CONSTRUCTION**
REIFEN MIT GETEILTER KARKASSENKONSTRUKTION
PNEU AYANT UNE CONSTRUCTION À NAPPES À CORPS FENDU

(30) Priority: 15.03.2013 US 201313832501
(43) Date of publication of application: 20.01.2016
(73) Proprietor: Bridgestone Americas Tire Operations, LLC, Nashville, TN 37201 (US)
(72) Inventor: MARELLA, Anthony, Tallmadge, Ohio 44278 (US); WALTERS, Jacob, Medina, Ohio 44256 (US); CLEMMER, Kathleen, Akron, Ohio 44301 (US); STUCKEY, Jon, Lorain, OH 44053 (US); WEATHERWAX, Kent, Akron, Ohio 44301 (US); WRIGHT, Richard, Wadsworth, Ohio 44281 (US); COPELAND, Shawn, Wadsworth, Ohio 44281 (US); GEHRES, Justin, Uniontown, Ohio US (US); SALEHI, Makameh, Nashville, TN 37205 (US); NORWOOD, John, Wadsworth, Ohio 44281 (US)
(74) Representative: Banzer, Hans-Jörg
(86) International application number: PCT/US2014/015087
(87) International publication number: WO 2014/149214

(56) References cited:
- WO-A1-02/00451
- FR-A- 1 211 735
- JP-A- 2001 191 722
- JP-A- 2013 028 195
- US-A- 5 273 094
- US-A1- 2008 093 003
- US-A1- 2009 101 267
- US-B1- 6 305 452
- US-B1- 6 345 658

## Description

### BACKGROUND

In the construction of a tire, one of the many key elements is the body ply. The body ply, which typically comprises reinforcement cord and rubber skim, wraps around the bead wire bundle (creating a "turnup" portion), passes radially across the tire, and wraps around the bead bundle on the opposite side (creating another "turnup" portion). The body ply provides strength to contain the air pressure within the tire and provides for sidewall impact resistance.

US 5,273,094 A discloses a pneumatic tire comprising a belt oriented in a crown portion of the tire and having a first belt edge and a second belt edge, a first bead portion, a second bead portion, a first sidewall, and a second sidewall. A first fiber-reinforced half body ply extends about the first bead portion, along the first sidewall, and terminates inside of the first belt edge. A second fiber-reinforced half body ply extends about the second bead portion, along the second sidewall, and terminates inside of the second belt edge. A third fiber-reinforced half body ply extends from above the first bead portion, along the first sidewall, and terminates inside of the first belt edge. A fourth fiber-reinforced half body ply extends from above the second bead portion, along the second sidewall, and terminates inside of the second belt edge.

A prevalent consideration in the tire industry is the increasing of fuel efficiency through tire design. One strategy for increasing fuel efficiency through tire design is reducing the weight of the tire. Likewise, reduction of the materials used in tire construction would conserve natural resources.

What is needed is a reduced-weight tire and a method for making the same.

### SUMMARY

According to the invention, a pneumatic tire as defined in claim 1 is provided. The dependent claims define preferred and/or advantageous embodiments of the invention

In one embodiment of the invention, a pneumatic tire is provided, the pneumatic tire comprising: at least one belt oriented in a crown portion of the tire, the at least one belt comprising a first belt edge and a second belt edge; a first bead portion; a second bead portion; a first sidewall; a second sidewall; a first fiber-reinforced half body ply extending from inside of the first belt edge, along the first sidewall, about the first bead portion, along the first sidewall, and terminating inside of the first belt edge; a second fiber-reinforced half body ply extending from inside of the second belt edge, along the second sidewall, about the second bead portion, along the second sidewall, and terminating inside of the second belt edge; and a cut-out zone in the crown portion of the tire, with the caveat that no fiber-reinforced material extends through the cut-out zone.

### BRIEF DESCRIPTION OF THE DRAWINGS

The accompanying figures, which are incorporated in and constitute a part of the specification, illustrate various example apparatuses and systems, and are used merely to illustrate an embodiment of the invention as well as examples not forming part of the invention. In the figures, like elements bear like reference numerals.
**Figure 1** illustrates a cross-sectional view of an example arrangement of a tire having a split body ply construction, which example arrangement does not form part of the invention.
**Figure 2** illustrates a cross-sectional view of an arrangement of a tire having a split body ply construction according to an embodiment of the invention.
**Figure 3** illustrates a cross-sectional view of an example arrangement of a tire having a split body ply construction, which example arrangement does not form part of the invention.
**Figure 4** illustrates a cross-sectional view of a prior art tire construction.

### DETAILED DESCRIPTION

The body ply of a tire radially inwardly of the belt in the crown portion carries relatively little to no force from the inflation pressure of the tire. As a result, any reinforcement provided by the body ply in this region is effectively unnecessary to the function of the tire. A tire void of body ply reinforcement in the crown portion would have less weight, and require less body ply material, than prior art tire constructions.

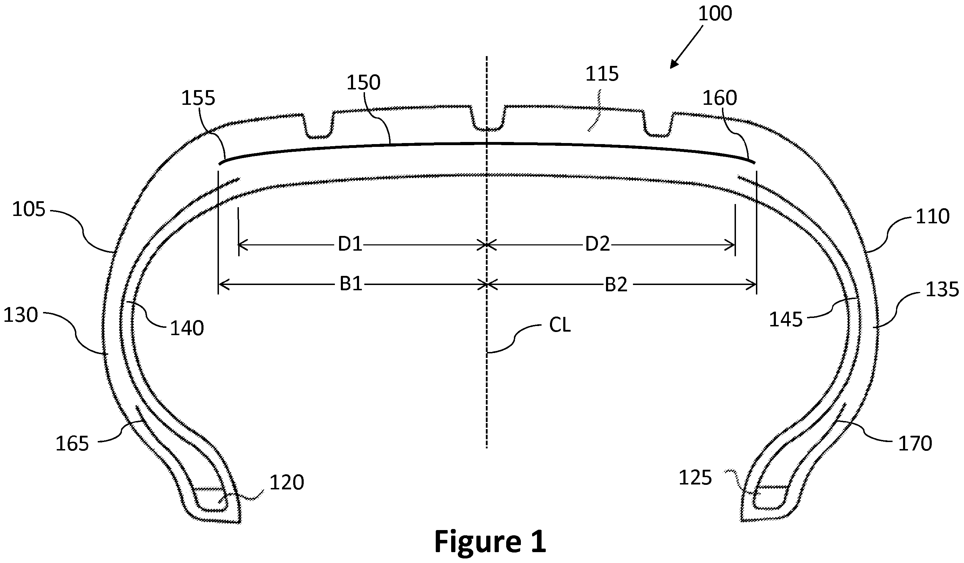

**Figure 1** illustrates a cross-sectional view of an example arrangement of a tire **100** having a split body ply construction. This example arrangement does not form part of the invention. Tire **100** may comprise a first sidewall **105**, a second sidewall **110**, a crown portion **115**, a first bead portion **120**, and a second bead portion **125**. Tire **100** may additionally comprise a first side **130** and a second side **135**.

Tire **100** may comprise a pneumatic tire. In one example, tire **100** is a pneumatic tire designed for application to a vehicle. In another example, tire **100** is a pneumatic tire designed for application to a road vehicle. In one example, tire **100** is a non-directional tire, wherein tire **100** is configured to be mounted on a vehicle without a specified forward rolling direction. In another example, tire **100** is a uni-directional tire, wherein tire **100** is configured to be mounted on a vehicle with a specified forward rolling direction.

In one example, tire **100** comprises at least one body ply. In another example, tire **100** comprises at least one fiber-reinforced body ply. In another example, tire **100** comprises at least one fiber-reinforced half body ply. In one example, tire **100** comprises a first fiber-reinforced half body ply **140** and a second fiber-reinforced half body ply **145**. First fiber-reinforced half body ply **140** and second fiber-reinforced half body ply **145** may comprise a reinforcement cord and rubber skim. In one example, the reinforcement cord is a fiber reinforcement cord. In another example, the reinforcement cord can be any of a variety of materials, including for example, polyester, rayon, nylon, aramid, and polyethylene naphthalate (PEN). In one example, the rubber skim is any of a variety of rubber materials, having any of a variety of common formulations, densities, and other properties for use in tires.

In one example, tire **100** comprises a belt **150**. In another example, tire **100** comprises a plurality of belts **150**. Belt **150** may be oriented in crown portion **115** of tire **100**. Crown portion **115** may be defined as the radially outermost portion of tire **100**, extending generally between first sidewall **105** and second sidewall **110**. Belt **150** may comprise any of a variety of materials, including a metal. In one example, belt **150** comprises a first belt edge **155** and a second belt edge **160**.

In one example, first fiber-reinforced half body ply **140** extends about first bead portion **120**, along first sidewall **105** and terminating inside ("inside" being toward the centerline **CL** of tire **100**) of first belt edge **155**. In another example, first fiber-reinforced half body ply **140** extends from a point in first bead portion **120**. In another example, first fiber-reinforced half body ply **140** extends from a point in first sidewall **105**. In another example, first fiber-reinforced half body ply **140** extends from a point in the shoulder region of first side **130** of tire **100**. In another example, first fiber-reinforced half body ply **140** extends from inside first belt edge **155** of tire **100**.

In one example, second fiber-reinforced half body ply **145** extends about second bead portion **125**, along second sidewall **110** and terminating inside ("inside" being toward the centerline **CL** of tire **100**) of second belt edge **160**. In another example, second fiber-reinforced half body ply **145** extends from a point in second bead portion **125**. In another example, second fiber-reinforced half body ply **145** extends from a point in second sidewall **110**. In another example, second fiber-reinforced half body ply **145** extends from a point in the shoulder region of second side **135** of tire **100**. In another example, second fiber-reinforced half body ply **145** extends from inside second belt edge **160** of tire **100**.

In one example, first fiber-reinforced half body ply **140** comprises a first turnup portion **165** defined by the portion of first fiber-reinforced half body ply **140** extending about first bead portion **120**. In another example, second fiber-reinforced half body ply **145** comprises a second turnup portion **170** defined by the portion of second fiber-reinforced half body ply **145** extending about second bead portion **125**.

In one example, tire **100** comprises a centerline **CL** oriented at the laterally central point within tire **100**. Centerline **CL** may correspond with the centerline of a rim.

In one example, first fiber-reinforced half body ply **140** terminates at a point that is a distance **D1** from centerline **CL**. In another example, second fiber-reinforced half body ply **145** terminates at a point that is a distance **D2** from centerline **CL**.

In one example, tire **100** comprises a cut-out zone in crown portion **115**. In one example, no fiber-reinforced material extends through the cut-out zone, including any body ply or reinforcing ply. In another example, no reinforcement material extends through the cut-out zone. The phrase "cut-out zone" is used herein to mean the zone in crown potion **115** between the end points of first fiber-reinforced half body ply **140** and second fiber-reinforced half body ply **145**. The cut-out zone may have a width comprising the sum of distance **D1** and distance **D2**.

In one example, first belt edge **155** extends to a distance **B1** from centerline **CL**. In another example, second belt edge **160** extends to a distance **B2** from centerline **CL**.

At least one of first fiber-reinforced half body ply **140** and second fiber-reinforced half body ply **145** may underlap belt **150**. In one example, distance **B1** is greater than the distance **D1**. In another example, distance **B2** is greater than the distance **D2**. In one example, distance **B1** and distance **B2** are between about 0.0 in. and about 3.0 in. greater than distance **D1** and distance **D2**, respectively. In another example, distance **B1** and distance **B2** are between about 0.2 in. and about 2.0 in. greater than distance **D1** and distance **D2**, respectively. In another example, distance **B1** and distance **B2** are between about 0.3 in. and about 1.0 in. greater than distance **D1** and distance **D2**, respectively.

In one example, at least one of first fiber-reinforced half body ply **140** and second fiber-reinforced half body ply **145** is oriented radially inwardly of belt **150**. In another example, both of first fiber-reinforced half body ply **140** and second fiber-reinforced half body ply **145** are oriented radially inwardly of belt **150**. In another example, at least one of first fiber-reinforced half body ply **140** and second fiber-reinforced half body ply **145** is oriented radially outwardly of belt **150.**

In one example, tire **100** comprises a third fiber-reinforced half body ply (not shown) extending about first bead portion **120**, along first sidewall **105**, and terminating inside first belt edge **155**. In another example, tire **100** comprises a fourth fiber-reinforced half body ply (not shown) extending about second bead portion **120**, along second sidewall **110**, and terminating inside second belt edge **160**. In another example, tire **100** comprises fiber-reinforced half body plies in addition to the third and fourth fiber-reinforced half body plies.

In one example, tire **100** comprises at least one body ply beginning in first side **130**, extending across crown portion **115**, and terminating in second side **135**. The at least one body ply may extend about one or both of first bead portion **120** and second bead portion **125**.

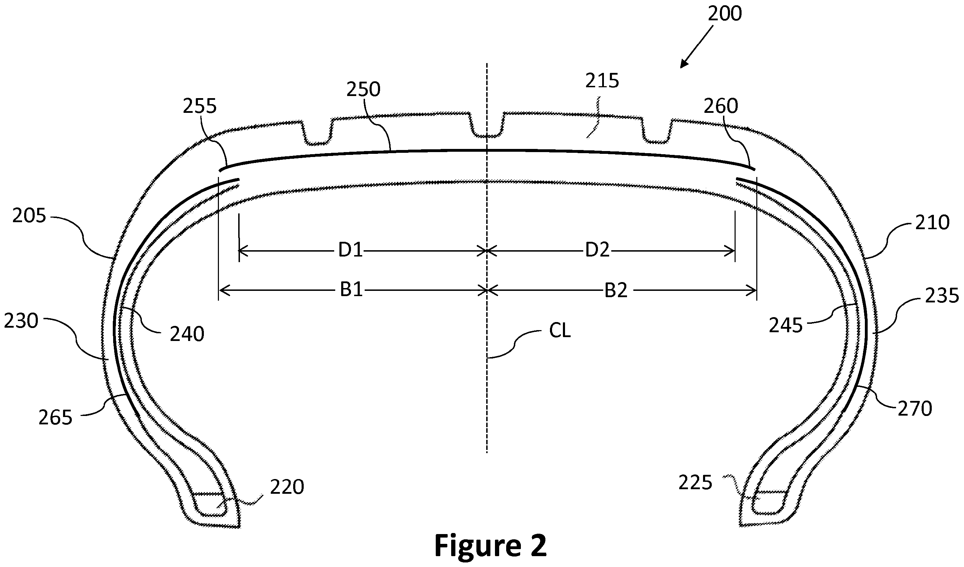

**Figure 2** illustrates a cross-sectional view of an arrangement of a tire **200** having a split body ply construction according to an embodiment of the invention. Tire **200** may comprise a first sidewall **205**, a second sidewall **210**, a crown portion **215**, a first bead portion **220**, and a second bead portion **225.** Tire **200** may additionally comprise a first side **230** and a second side **235**.

In one embodiment, tire **200** comprises at least one body ply. In another embodiment, tire **200** comprises at least one fiber-reinforced body ply. In another embodiment, tire **200** comprises at least one fiber-reinforced half body ply. In one embodiment, tire **200** comprises a first fiber-reinforced half body ply **240** and a second fiber-reinforced half body ply **245**. First fiber-reinforced half body ply **240** and second fiber-reinforced half body ply **245** may comprise a reinforcement cord and rubber skim.

In one embodiment, tire **200** comprises a belt **250**. In another embodiment, tire **200** comprises a plurality of belts **250**. Belt **250** may be oriented in crown portion **215** of tire **200**. In one embodiment, belt **250** comprises a first belt edge **255** and a second belt edge **260**.

In one embodiment, first fiber-reinforced half body ply **240** extends from inside of first belt edge **255**, along first sidewall **205**, about first bead portion **220**, along first sidewall **205**, and terminating inside of first belt edge **255**. In another embodiment, second fiber-reinforced half body ply **245** extends from inside of second belt edge **260**, along second sidewall **210**, about second bead portion **225**, along second sidewall **210**, and terminating inside of second belt edge **260**. In one embodiment, a third fiber-reinforced half body ply (not shown) extends from inside of first belt edge **255**, along first sidewall **205**, about first bead portion **220**, along first sidewall **205**, and terminating inside of first belt edge **255**. In another embodiment, a fourth fiber-reinforced half body ply (not shown) extends from inside of second belt edge **260**, along second sidewall **210**, about second bead portion **225**, along second sidewall **210**, and terminating inside of second belt edge **260**.

In one embodiment, tire **200** comprises at least one body ply beginning in first side **230**, extending across crown portion **215**, and terminating in second side **235**. The at least one body ply may extend about one or both of first bead portion **220** and second bead portion **225**. In one embodiment, tire **200** comprises a third fiber-reinforced half body ply (not shown) extending about first bead portion **220**, along first sidewall **205**, and terminating inside of first belt edge **255**. In another embodiment, tire **200** comprises a fourth fiber-reinforced half body ply (not shown) extending about second bead portion **220**, along first sidewall **205**, and terminating inside of first belt edge **255**.

In one embodiment, first fiber-reinforced half body ply **240** comprises a first turnup portion **265** defined by the portion of first fiber-reinforced half body ply **240** extending about first bead portion **220**. In another embodiment, second fiber-reinforced half body ply **245** comprises a second turnup portion **270** defined by the portion of second fiber-reinforced half body ply **245** extending about second bead portion **225**.

In one embodiment, tire **200** comprises a centerline **CL** oriented at the laterally central point within tire **200**. Centerline **CL** may correspond with the centerline of a rim.

In one embodiment, first fiber-reinforced half body ply **240** at least one of begins and terminates at a point that is a distance **D1** from centerline **CL**. In another embodiment, second fiber-reinforced half body ply **245** at least one of begins and terminates at a point that is a distance **D2** from centerline **CL**. In one embodiment, first belt edge **255** extends to a distance **B1** from centerline **CL**. In another embodiment, second belt edge **260** extends to a distance **B2** from centerline **CL**. In one embodiment, distance **B1** and distance **B2** are greater than distance **D1** and distance **D2**.

In one embodiment, first fiber-reinforced half body ply **240** is oriented radially inwardly of belt **250**. In one embodiment, second fiber-reinforced half body ply **245** is oriented radially inwardly of belt **250**.

In one embodiment, tire **200** comprises a cut-out zone in crown portion **215**. In one embodiment, no fiber-reinforced material extends through the cut-out zone, including any body ply or reinforcing ply. In another embodiment, no reinforcement material extends through the cut-out zone.

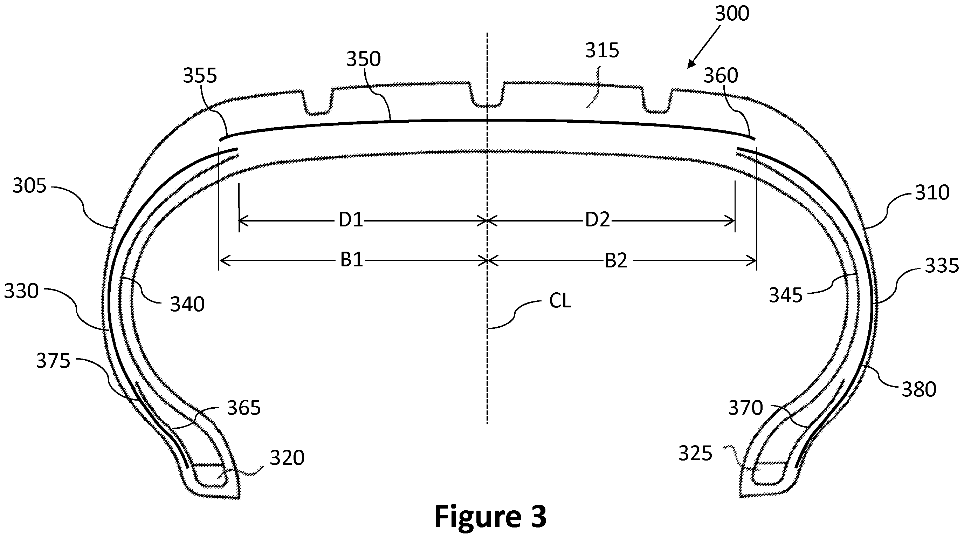

**Figure 3** illustrates a cross-sectional view of an example arrangement of a tire **300** having a split body ply construction. This example arrangement does not form part of the invention. Tire **300** may comprise a first sidewall **305**, a second sidewall **310**, a crown portion **315**, a first bead portion **320**, and a second bead portion **325**. Tire **300** may additionally comprise a first side **330** and a second side **335**.

In one example, tire **300** comprises at least one body ply. In another example, tire **300** comprises at least one fiber-reinforced body ply. In another example, tire **300** comprises at least one fiber-reinforced half body ply. In one example, tire **300** comprises a first fiber-reinforced half body ply **340** and a second fiber-reinforced half body ply **345**. First fiber-reinforced half body ply **340** and second fiber-reinforced half body ply **345** may comprise a reinforcement cord and rubber skim.

In one example, tire **300** comprises a belt **350**. In another example, tire **300** comprises a plurality of belts **350**. Belt **350** may be oriented in crown portion **315** of tire **300**. In one example, belt **350** comprises a first belt edge **355** and a second belt edge **360**.

In one example, first fiber-reinforced half body ply **340** extends about first bead portion **320**, along first sidewall **305**, and terminates inside of first belt edge **355**. In another example, second fiber-reinforced half body ply **345** extends about second bead portion **325**, along second sidewall **310**, and terminates inside of second belt edge **360**.

In one example, first fiber-reinforced half body ply **340** comprises a first turnup portion **365** defined by the portion of first fiber-reinforced half body ply **340** extending about first bead portion **320**. In another example, second fiber-reinforced half body ply **345** comprises a second turnup portion **370** defined by the portion of second fiber-reinforced half body ply **345** extending about second bead portion **325**.

In one example, a third fiber-reinforced half body ply **375** extends from above bead portion **320**, along first sidewall **305**, and terminates inside of first belt edge **355**. In another example, a fourth fiber-reinforced half body ply **380** extends from above bead portion **325**, along second sidewall **310**, and terminates inside of second belt edge **360**. In one example, at least one of third fiber-reinforced half body ply **375** and fourth fiber-reinforced half body ply **380** extends from below bead portions **320** and **325**. In one example, at least one of third fiber-reinforced half body ply **375** and fourth fiber-reinforced half body ply **380** are oriented radially outwardly of first fiber-reinforced half body ply **340** and second fiber-reinforced half body ply **345**. In one example, first fiber-reinforced half body ply **340**, second fiber-reinforced half body ply **345**, third fiber-reinforced half body ply **375**, and fourth fiber-reinforced half body ply **380** are oriented radially inwardly of belt **350**.

In one example, tire **300** comprises a centerline **CL** oriented at the laterally central point within tire **300**. Centerline **CL** may correspond with the centerline of a rim.

In one example, first fiber-reinforced half body ply **340** terminates at a point that is a distance **D1** from centerline **CL**. In another example, second fiber-reinforced half body ply **345** terminates at a point that is a distance **D2** from centerline **CL**. In another example, third fiber-reinforced half body ply **375** terminates at a point that is a distance **D1** from centerline **CL**. In another example, fourth fiber-reinforced half body ply **380** terminates at a point that is a distance **D2** from centerline **CL**.

In one example, first belt edge **355** extends to a distance **B1** from centerline **CL**. In another example, second belt edge **360** extends to a distance **B2** from centerline **CL**. In one example, distance **B1** and distance **B2** are greater than distance **D1** and distance **D2.**

In one example, tire **300** comprises a cut-out zone in crown portion **315**. In one example, no fiber-reinforced material extends through the cut-out zone, including any body ply or reinforcing ply. In another example, no reinforcement material extends through the cut-out zone.

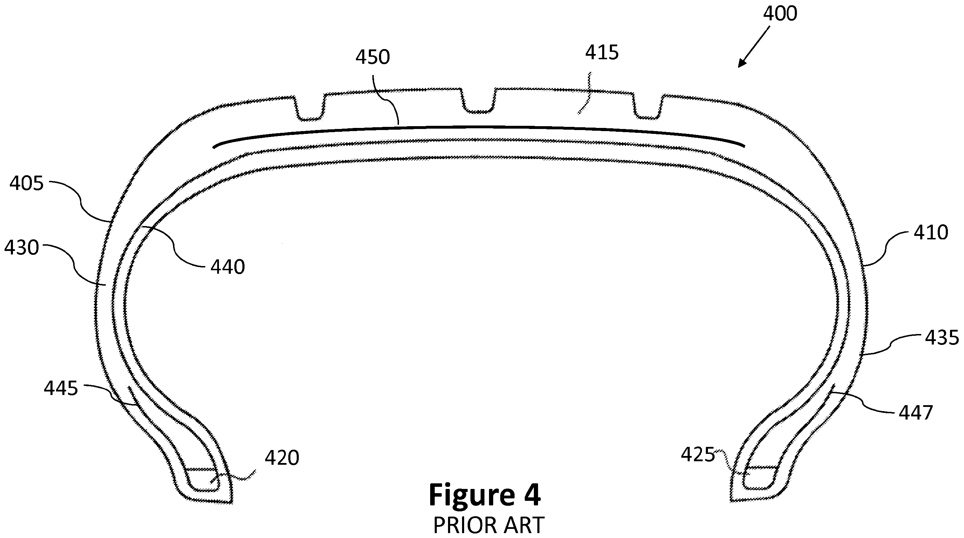

**Figure 4** illustrates a cross-sectional view of a tire **400** having a prior art construction. Tire **400** consists essentially of a first sidewall **405**, a second sidewall **410**, a crown portion **415**, a first side **430**, a second side **435**, a first bead portion **420**, and a second bead portion **425**.

As shown, tire **400** has a body ply **440**. Body ply **440** extends about first bead portion **455**, along sidewall **405** in first side **430**, across crown portion **415**, along sidewall **410** in second side **435**, and about second bead portion **425**. As shown, body ply **440** has a first turnup portion **445** defined by the portion of body ply **440** extending about first bead portion **420**. Body ply **440** also has a second turnup portion **447** defined by the portion of body ply **440** extending about second bead portion **425**. As shown, tire **400** has at least one belt **450**.

As illustrated in **Figure 4**, body ply **440** extends across the width of tire **400** without a cut-out zone.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See Bryan A. Garner, A Dictionary of Modern Legal Usage 624 (2d. Ed. 1995). Also, to the extent that the terms "in" or "into" are used in the specification or the claims, it is intended to additionally mean "on" or "onto." To the extent that the term "selectively" is used in the specification or the claims, it is intended to refer to a condition of a component wherein a user of the apparatus may activate or deactivate the feature or function of the component as is necessary or desired in use of the apparatus. To the extent that the term "operatively connected" is used in the specification or the claims, it is intended to mean that the identified components are connected in a way to perform a designated function. As used in the specification and the claims, the singular forms "a," "an," and "the" include the plural. Finally, where the term "about" is used in conjunction with a number, it is intended to include ± 10% of the number. In other words, "about 10" may mean from 9 to 11.

As stated above, while the present application has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art, having the benefit of the present application. Therefore, the application, in its broader aspects, is not limited to the specific details, illustrative examples shown, or any apparatus referred to. Departures may be made from such details, examples, and apparatuses without departing from the scope of the general inventive concept as defined in the claims.

## Claims

1. A pneumatic tire (200), comprising:
at least one belt (250) oriented in a crown portion of the tire (215), the at least one belt (250) comprising a first belt edge (255) and a second belt edge (260);
a first bead portion (220);
a second bead portion (225);
a first sidewall (205);
a second sidewall (210);
a first fiber-reinforced half body ply (240) extending from inside of the first belt edge (255), toward a centerline CL of the tire, along the first sidewall (205), about the first bead portion (220), along the first sidewall (205), and terminating inside of the first belt edge (255), toward a centerline CL of the tire (200);
a second fiber-reinforced half body ply (245) extending from inside of the second belt edge (260), toward a centerline CL of the tire, along the second sidewall (210), about the second bead portion (225), along the second sidewall (210), and terminating inside of the second belt edge (260), toward a centerline CL of the tire (200); and
a cut-out zone in the crown portion (215) of the tire (200),
with the caveat that neither a fiber-reinforced material, nor a reinforcement material, extends through the cut-out zone.

2. The pneumatic tire (200) of claim 1, wherein the first fiber-reinforced half body ply (240) and the second fiber-reinforced half body ply (245) are oriented radially inwardly of the belt (250).

3. The pneumatic tire (200) of claim 1, further comprising a third fiber-reinforced half body ply extending about the first bead portion (220), along the first sidewall (205), and terminating inside of the first belt edge (255) and a fourth fiber-reinforced half body ply extending about the second bead portion (225), along the second sidewall (210), and terminating inside of the second belt edge (260).

4. The pneumatic tire (200) of claim 1, wherein the tire (200) comprises a centerline CL;
and wherein the first fiber-reinforced half body ply (240) terminates at a point that is a distance D1 from centerline CL;
and wherein the second fiber-reinforced half body ply (245) terminates at a point that is a distance D2 from centerline CL;
and wherein the first belt edge (255) extends to a distance B1 from centerline CL;
and wherein the second belt edge (260) extends to a distance B2 from centerline CL;
and wherein the distance B1 is greater than the distance D1 and the distance B2 is greater than the distance D2.

5. The pneumatic tire (200) of claim 4, wherein distance B1 and distance B2 are up to about 0.0762 meters greater than distance D1 and distance D2.

## Patentansprüche

1. Luftreifen (200), umfassend:
mindestens einen Gürtel (250), der in einem Kronenabschnitt des Reifens (215) ausgerichtet ist, wobei der mindestens eine Gürtel (250) einen ersten Gürtelrand (255) und einen zweiten Gürtelrand (260) umfasst;
einen ersten Wulstabschnitt (220);
einen zweiten Wulstabschnitt (225);
eine erste Seitenwand (205);
eine zweite Seitenwand (210);
eine erste faserverstärkte Halbkarkassenlage (240), die sich von der Innenseite des ersten Gürtelrandes (255) hin zu einer Mittellinie CL des Reifens entlang der ersten Seitenwand (205) um den ersten Wulstabschnitt (220) entlang der ersten Seitenwand (205) erstreckt und innerhalb des ersten Gürtelrandes (255) hin zu einer Mittellinie CL des Reifens (200) endet;
eine zweite faserverstärkte Halbkarkassenlage (245), die sich von der Innenseite des zweiten Gürtelrandes (260) hin zu einer Mittellinie CL des Reifens entlang der zweiten Seitenwand (210), um den zweiten Wulstabschnitt (225), entlang der zweiten Seitenwand (210) erstreckt und innerhalb des zweiten Gürtelrandes (260) hin zu einer Mittellinie CL des Reifens (200) endet; und
eine Ausschnittzone im Kronenabschnitt (215) des Reifens (200),
mit dem Vorbehalt, dass sich weder ein faserverstärktes Material noch ein Verstärkungsmaterial durch die Ausschnittzone erstreckt.

2. Luftreifen (200) nach Anspruch 1, wobei die erste faserverstärkte Halbkarkassenlage (240) und die zweite faserverstärkte Halbkarkassenlage (245) radial nach innen von dem Gürtel (250) ausgerichtet sind.

3. Luftreifen (200) nach Anspruch 1, ferner umfassend eine dritte faserverstärkte Halbkarkassenlage, die sich um den ersten Wulstabschnitt (220) entlang der ersten Seitenwand (205) erstreckt und innerhalb des ersten Gürtelrandes (255) endet, und eine vierte faserverstärkte Halbkarkassenlage, die sich um den zweiten Wulstabschnitt (225) entlang der zweiten Seitenwand (210) erstreckt und die innerhalb des zweiten Gürtelrandes (260) endet.

4. Luftreifen (200) nach Anspruch 1, wobei der Reifen (200) eine Mittellinie CL umfasst;
und wobei die erste faserverstärkte Halbkarkassenlage (240) an einem Punkt endet, der ein Abstand D1 von der Mittellinie CL ist;
und wobei die zweite faserverstärkte Halbkarkassenlage (245) an einem Punkt endet, der ein Abstand D2 von der Mittellinie CL ist;
und wobei sich der erste Gürtelrand (255) bis zu einem Abstand B1 von der Mittellinie CL erstreckt;
und wobei sich der zweite Gürtelrand (260) bis zu einem Abstand B2 von der Mittellinie CL erstreckt;
und wobei der Abstand B1 größer als der Abstand D1 und der Abstand B2 größer als der Abstand D2 ist.

5. Luftreifen (200) nach Anspruch 4, wobei Abstand B1 und Abstand B2 bis zu etwa 0,0762 Meter größer sind als Abstand D1 und Abstand D2.

## Revendications

1. Pneumatique (200), comprenant :
au moins une ceinture (250) orientée dans une partie de sommet du pneu (215), l'au moins une ceinture (250) comprenant un premier bord de ceinture (255) et un deuxième bord de ceinture (260) ;
une première partie de talon (220) ;
une deuxième partie de talon (225) ;
un premier flanc (205) ;
un deuxième flanc (210) ;
une première demi-nappe carcasse renforcée par des fibres (240) s'étendant à partir de l'intérieur du premier bord de ceinture (255), en direction d'une ligne médiane CL du pneu, le long du premier flanc (205), autour de la première partie de talon (220), le long du premier flanc (205), et se terminant à l'intérieur du premier bord de ceinture (255), en direction d'une ligne médiane CL du pneu (200) ;
une deuxième demi-nappe carcasse renforcée par des fibres (245) s'étendant à partir de l'intérieur du deuxième bord de ceinture (260), en direction d'une ligne médiane CL du pneu, le long du deuxième flanc (210), autour de la deuxième partie de talon (225), le long du deuxième flanc (210), et se terminant à l'intérieur du deuxième bord de ceinture (260), en direction d'une ligne médiane CL du pneu (200) ; et
une zone de découpe dans la partie de sommet (215) du pneu (200),
sous réserve que ni un matériau renforcé par des fibres ni un matériau de renfort ne s'étendent à travers la zone de découpe.

2. Pneumatique (200) selon la revendication 1, dans lequel la première demi-nappe carcasse renforcée par des fibres (240) et la deuxième demi-nappe carcasse renforcée par des fibres (245) sont orientées radialement vers l'intérieur de la ceinture (250).

3. Pneumatique (200) selon la revendication 1, comprenant en outre une troisième demi-nappe carcasse renforcée par des fibres s'étendant autour de la première partie de talon (220), le long du premier flanc (205), et se terminant à l'intérieur du premier bord de ceinture (255) et une quatrième demi-nappe carcasse renforcée par des fibres s'étendant autour de la deuxième partie de talon (225), le long du deuxième flanc (210), et se terminant à l'intérieur du deuxième bord de ceinture (260).

4. Pneumatique (200) selon la revendication 1, dans lequel le pneu (200) comprend une ligne médiane CL ;
et dans lequel la première demi-nappe carcasse renforcée par des fibres (240) se termine à un point qui est à une distance D1 de la ligne médiane CL ;
et dans lequel la deuxième demi-nappe carcasse renforcée par des fibres (245) se termine à un point qui est à une distance D2 de la ligne médiane CL ;
et dans lequel le premier bord de ceinture (255) s'étend jusqu'à une distance B1 de la ligne médiane CL ;
et dans lequel le deuxième bord de ceinture (260) s'étend jusqu'à une distance B2 de la ligne médiane CL ;
et dans lequel la distance B1 est supérieure à la distance D1 et la distance B2 est supérieure à la distance D2.

5. Pneumatique (200) selon la revendication 4, dans lequel la distance B1 et la distance B2 sont jusqu'à environ 0,0762 mètre plus grandes que la distance D1 et la distance D2.
